# EUROPÄISCHE PATENTANMELDUNG

(11) **EP 4 793 533 A1**
(43) Veröffentlichungstag der Anmeldung: **19.08.2026**
(21) Anmeldenummer: 25157811.8
(22) Anmeldetag: 13.02.2025
(51) Int. Cl.: F16M 11/08, F16M 11/20, F16M 13/02

(54) **AUSLEGERSYSTEM**

(71) Anmelder: Ondal Medical Systems GmbH, 36088 Hünfeld (DE)
(72) Erfinder: Oginski, Stefan, 36043 Fulda (DE); Pedde, Jörg, 36100 Steinau (DE); Adrian, Ewald, 36039 Fulda (DE); Muratidi, Georg, 36280 Oberaula (DE); Spies, Lukas, 36132 Eiterfeld (DE)
(74) Vertreter: Maiwald GmbH

(57) **Zusammenfassung**

Die vorliegende Erfindung betrifft Haltevorrichtungen für ein Endgerät sowie entsprechende Haltesysteme, insbesondere zur Halterung von medizinischen Vorrichtungen, an welche erhöhte Anforderungen an die Sterilität und an eine sichere Anpassung der Position des Endgeräts gestellt werden. In diesem Sinne wird eine Haltevorrichtung (10, 10b) für ein Endgerät vorgeschlagen, umfassend einen länglichen Körper (12), welcher in Längsrichtung und in Umfangsrichtung eine durchgehende Trägerstruktur definiert, eine zylinderförmige Buchse (24), und einen zylinderförmigen Zapfen (20). Der Körper (12) weist in Längsrichtung an einem ersten Endbereich (14) eine erste Bohrung (18) und an einem dem ersten Endbereich (14) in Längsrichtung gegenüberliegenden zweiten Endbereich (16) eine zweite Bohrung (22) auf; der Zapfen (20) in der ersten Bohrung (18) und die Buchse (24) in der zweiten Bohrung (22) sind derart aufgenommen, dass die Buchse (24) und der Zapfen (20) sich ausgehend vom Körper (12) senkrecht und in einer Ebene erstrecken und eine jeweilige Drehachse senkrecht zum Körper (12) definieren. Erfindungsgemäß definieren der Körper (12), die Buchse (24) und der Zapfen (20) jeweils einen durchgehenden innenliegenden Hohlraum (26, 28, 30), wobei die Hohlräume (26, 28, 30) zum Aufnehmen mindestens einer Versorgungsleitung (38) und zum Durchführen eines endseitigen Anschlusses der mindestens einen Versorgungsleitung (38) ausgelegt und dimensioniert sind und wobei zumindest der Zapfen (20) eine erste radiale Öffnung (50) aufweist, welche zum Hohlraum (26) des Körpers (12) ausgerichtet ist.

## Beschreibung

### Technisches Gebiet

Die vorliegende Erfindung betrifft Haltevorrichtungen für ein Endgerät sowie entsprechende Haltesysteme, insbesondere zur Halterung von medizinischen Vorrichtungen, an welche erhöhte Anforderungen in Hinblick auf die Einhaltung von Hygienebedingungen, etwa Sterilität, und in Hinblick auf eine sichere Anpassung der Position des Endgeräts zu stellen sind.

### Stand der Technik

In Krankenhäusern und ärztlichen Behandlungsräumen werden typischerweise Vorrichtungen, wie bspw. OP-Leuchten oder Diagnose- und/oder Überwachungsmonitore, höhenverstellbar aufgehängt, um diese an die Bedürfnisse des Anwenders anzupassen und entsprechend positionieren zu können. Um eine Justierung und Positionierung solcher Vorrichtungen zu unterstützen, werden in der Regel Ausleger verwendet, welche - für sich genommen oder in Kombination mit einem Federarm - einen vorgegebenen, potenziellen Bewegungsradius der am Ausleger befestigten Vorrichtung definieren. Typischerweise ist zumindest eine Bewegung der Vorrichtung in seitlicher oder lateraler Richtung mithilfe von mindestens einem Ausleger möglich. So können bspw. mehrere Ausleger miteinander verbunden und gelenkig gelagert sein, um das Schwenken um entsprechende senkrechte Achsen zu ermöglichen und eine gewünschte Positionierung bereitzustellen.

Für das am Ausleger befestigte Endgerät ist/sind typischerweise ebenfalls eine oder mehrere Versorgungsleitungen vorgesehen. Die Versorgungsleitungen können bspw. eine Energieversorgung oder einen Stromanschluss mittels eines Kabels ermöglichen. Hierbei sind für die Versorgungsleitungen oft separate Haltevorrichtungen vorgesehen, welche unterhalb des Auslegers angebracht sind. Alternativ können solche Versorgungsleitungen auch zumindest teilweise innerhalb einer äußeren Verkleidung des Auslegers oder zumindest teilweise innerhalb der tragenden Struktur des Auslegers geführt sein. Eine Führung zumindest teilweise innerhalb der tragenden Struktur ist bspw. für Ausleger und Federarmen bekannt, welche an einer Decke befestigt sind.

### Darstellung der Erfindung

Erfindungsgemäß wurde erkannt, dass derzeit bekannte Lösungen zur Halterung von Versorgungsleitungen eines Endgeräts Nachteile aufweisen. So wurde festgestellt, dass bspw. elektrische Leitungen in bestehenden Lösungen für eine Befestigung eines Endgeräts an einer Decke, bspw. in einem Reinraum oder OP-Raum, typischerweise keine Stecker oder nur klein dimensionierte Steckverbinder aufweisen. Entsprechend können die Querschnitte der tragenden Struktur des Auslegers vergleichsweise gering bemessen sein. Für kurze Ausleger, welche bspw. in einem nicht-sterilen Bereich befestigt sind und für die eine Wandmontage oder Befestigung des Endgeräts an einer Versorgungskonsole in Betracht kommt, sind hingegen vergleichsweise große Stecker, wie etwa abgewinkelte Kaltgerätestecker, vorgesehen. Für solche Versorgungsleitungen können bspw. separate Haltevorrichtungen vorgesehen sein, welche unterhalb des Auslegers angebracht und in welche die Versorgungsleitungen eingelegt sind.

Es wurde auch erkannt, dass die Versorgungsleitungen in diesem Fall nur in einem begrenzten Abschnitt abgedeckt sind, jedoch typischerweise um die Gelenke oder Drehachsen freiliegen. Aus hygienischen Gesichtspunkten sind freiliegende Kabel in Behandlungsräumen aber grundsätzlich unerwünscht und nachteilig, da sich an diesen und unter diesen Verschmutzungen und Keime absetzen können. Diese Keim-Anhaftungen und Verschmutzungen können wegen der eingeschränkten Reinigungsmöglichkeiten an diesen Positionen nicht hinreichend und schon gar nicht unter Berücksichtigung hygienischer Standards eines OP-Raums, beseitigt werden. Im Lichte einer Gefahr des Auftretens und Einnistens multiresistenter Keime wurde vorliegend erkannt, dass eine vollständige Abdeckung der verlegten Versorgungsleitungen wünschenswert wäre, um hygienische Verhältnisse am Inventar eines OP-Raums sicherzustellen und die hygienischen Anforderungen zu erfüllen, indem die Vorrichtungen durch einfache Reinigung ihrer Außenoberflächen verschmutzungsfrei gehalten werden können.

Darüber hinaus wurde erkannt, dass die Versorgungsleitungen, auch im Falle einer zumindest teilweisen Führung innerhalb der tragenden Struktur des Auslegers, nach dem Stand der Technik an den Gelenkstellen bzw. Drehachsen der tragenden Struktur herumgeführt werden. Erfindungsgemäß wurde in diesem Zusammenhang schließlich auch festgestellt, dass die Versorgungsleitungen unter solchen Umständen beim Drehen der Gelenke gestreckt oder gestaucht werden können. Hierdurch können nicht nur Beschädigungen an der Versorgungsleitung selbst auftreten, sondern es kann auch das Drehen um die Gelenke beeinträchtigt werden. Ausgehend von dem bekannten Stand der Technik ist es daher eine Aufgabe der vorliegenden Erfindung, eine Haltevorrichtung für ein Endgerät bereitzustellen, welche eine sichere Führung der Versorgungsleitungen auch bei einer Bewegung der Haltevorrichtung um ein Gelenk ermöglicht und gleichermaßen eine einfache und sterile Reinigung sicherstellt. Diese Aufgabe wird durch den Gegenstand der unabhängigen Ansprüche gelöst. Vorteilhafte Weiterbildungen ergeben sich aus den Unteransprüchen, der Beschreibung und den Figuren.

Entsprechend wird eine Haltevorrichtung für ein Endgerät vorgeschlagen, umfassend einen länglichen Körper, welcher in Längsrichtung und in Umfangsrichtung eine durchgehende Trägerstruktur definiert, eine zylinderförmige Buchse, und einen zylinderförmigen Zapfen. Der Körper weist hierfür in Längsrichtung an einem ersten Endbereich eine erste Bohrung und an einem dem ersten Endbereich in Längsrichtung gegenüberliegenden zweiten Endbereich eine zweite Bohrung auf, wobei der Zapfen in der ersten Bohrung und die Buchse in der zweiten Bohrung derart aufgenommen sind, dass die Buchse und der Zapfen sich ausgehend vom Körper senkrecht und in einer Ebene erstrecken und eine jeweilige Drehachse senkrecht zum Körper definieren. Erfindungsgemäß definieren der Körper, die Buchse und der Zapfen jeweils einen durchgehenden inneren bzw. innenliegenden Hohlraum, wobei die Hohlräume zum Aufnehmen mindestens einer Versorgungsleitung und zum Durchführen eines endseitigen Anschlusses der mindestens einen Versorgungsleitung dimensioniert sind. Zumindest der Zapfen weist eine radiale Öffnung auf, welche zum Hohlraum des Körpers ausgerichtet ist.

Dadurch dass der Körper, der Zapfen und die Buchse jeweils einen durchgehenden inneren bzw. innenliegenden Hohlraum aufweisen und der Zapfen darüber hinaus eine Öffnung aufweist, welche zum Hohlraum des Körpers ausgerichtet ist, kann eine Versorgungsleitung besonders vorteilhaft innerhalb der Haltevorrichtung verlegt und geführt werden. Ein besonderer Vorteil ergibt sich dadurch, dass die Versorgungsleitung entlang der Drehachse verlaufen kann und somit innerhalb eines Gelenks angeordnet sein kann. Auf diese Weise kann nicht nur verhindert werden, dass die Versorgungsleitung bei einer Bewegung um die Drehachse gestreckt oder gestaucht wird. Dieser Ansatz bewirkt auch, dass die Versorgungsleitung nicht außerhalb des Gelenks geführt werden muss, sodass an der innenliegenden Versorgungsleitung keine Verunreinigungen, Verschmutzungen, oder Keime anhaften können.

Entsprechend wird eine sichere, innenliegende Verlegung der Versorgungsleitung über den Hohlraum des Zapfens in den Hohlraum des Körpers bis zur Buchse am zweiten Endbereich bereitgestellt. Es wird einerseits das Verschleißrisiko minimiert und es können andererseits höchste Hygienestandards auf diese Weise eingehalten werden. Weiterhin können die Hohlräume besonders vorteilhaft für das Durchführen von Anschlüssen oder Schnittstellen der Versorgungsleitung dimensioniert sein. So können die Hohlräume bspw. auch für das Durchführen von Steckern, wie angewinkelten Kaltgerätesteckern, ausgelegt und dimensioniert sein. Die Buchse und der Zapfen können entsprechend bevorzugt jeweils als Hohlzylinder mit einem entsprechenden Innendurchmesser ausgebildet sein. Bevorzugt liegt der Innendurchmesser in einem Bereich von 35 mm bis 70 mm, besonders bevorzugt von 40 mm bis 50 mm. Auf diese Weise kann das Durchführen von bspw. handelsüblichen Steckern vereinfacht werden, ohne dass die Buchse und der Zapfen vergleichsweise groß dimensioniert werden müssen.

Gleichermaßen kann der Körper insbesondere als Profil ausgebildet sein. Bevorzugt ist der Körper als Strangpressprofil ausgebildet, bspw. aus einem Metall oder einer Metalllegierung, insbesondere aus Aluminium oder einer Aluminiumlegierung. Der Körper kann sohin mittels der jeweiligen Drehachsen als Trägerstruktur für die schwenkbare Halterung des Endgeräts ausgebildet sein und weiterhin eine innenliegende Führung der mindestens einen Versorgungsleitung ermöglichen.

Um die Führung und das Verlegen der mindestens einen Versorgungsleitung zu erleichtern, sind die Hohlräume über die Gesamterstreckung bevorzugt gleich dimensioniert. Hierdurch kann das Risiko eines Verkeilens des Anschlusses der Versorgungsleitung erheblich verringert werden. Die Hohlräume können auch an allen Endbereichen eine Öffnung aufweisen. Auf diese Weise können sowohl die Herstellung als auch die Montage der Haltevorrichtung vereinfacht und wirtschaftlich effizient gestaltet werden.

Durch die Erstreckung der Buchse und des Zapfens in einer Ebene senkrecht zum Körper können die Buchse und der Zapfen zumindest teilweise parallel zueinander ausgerichtet sein. Bevorzugt erstrecken sich die Buchse und der Zapfen ausgehend vom Körper in entgegengesetzte Richtungen oder in die gleiche Richtung. Mit anderen Worten können beispielsweise die Buchse an der Oberseite des Körpers und der Zapfen an der Unterseite des Körpers hervorragen. Alternativ können die Buchse und der Zapfen jedoch auch an einer Seite des Körpers hervorragen, nämlich an der Oberseite oder an der Unterseite. In einem Haltesystem mit mehreren Haltevorrichtungen kann dabei auch vorgesehen sein, dass mindestens eine Haltevorrichtung derart ausgestaltet ist, dass sich die Buchse und der Zapfen ausgehend vom Körper in entgegengesetzte Richtungen erstrecken und mindestens eine Haltevorrichtung derart ausgestaltet ist, dass sich die Buchse und der Zapfen ausgehend vom Körper in die gleiche Richtung erstrecken. Bevorzugt ist die Haltevorrichtung zur Wandbefestigung über eine Befestigungsschnittstelle ausgebildet. So kann die Haltevorrichtung bspw. mit einem Wandadapter gekoppelt sein. Der Zapfen der Haltevorrichtung kann im montierten Zustand in einer entsprechenden Buchse des Wandadapters aufgenommen sein und damit die jeweilige Drehachse bilden. Die Drehachse am ersten Endbereich kann entsprechend als hinteres Gelenk bezeichnet sein; die Buchse am zweiten Endbereich kann eine entsprechende Drehachse für ein vorderes Gelenk bereitstellen. So kann die Buchse am zweiten Endbereich bspw. mit einem Zapfen einer weiteren Haltevorrichtung oder einer Befestigungsschnittstelle für das Endgerät gekoppelt sein. Entsprechend kann die mindestens eine Versorgungsleitung über die Hohlräume der jeweiligen Zapfen, Buchsen und Körper vom hinteren Gelenk zum vorderen Gelenk und bis zum Endgerät verlegt und im Wesentlichen vollständig innerhalb der Haltevorrichtung geführt sein.

Die mindestens eine Versorgungsleitung kann insbesondere ein Kabel umfassen oder als Kabel ausgebildet sein, um eine elektrisch leitfähige Verbindung zwischen dem Endgerät und bspw. einer Wandkontaktdose bereitzustellen. Die mindestens eine Versorgungsleitung kann auch einen Schlauch umfassen oder als Schlauch ausgebildet sein, um bspw. eine fluidische Versorgung für das Endgerät bereitzustellen, bspw. in Form von medizinischen Flüssigkeiten oder Gasen für eine medizinische Vorrichtung oder zur medizinischen Versorgung.

Die Haltevorrichtung kann insbesondere als Ausleger für eine Wandbefestigung des Endgeräts ausgebildet sein. Wie vorstehend beschrieben, kann eine Wandbefestigung bspw. mittels einer Befestigungsschnittstelle, wie eines Wandadapters, bereitgestellt sein. Der Wandadapter kann eine entsprechende Buchse aufweisen, in welche der Zapfen aufgenommen und drehbar gelagert ist. Der Ausleger erstreckt sich in einem üblichen Gravitationsfeld im Wesentlichen in horizontaler Richtung, sodass der Körper sich gleichfalls horizontal und senkrecht zur Wand erstreckt und der Zapfen, während die Buchse sich im Wesentlichen senkrecht zum Körper und in vertikaler Richtung erstrecken. Der Ausleger kann entsprechend an der Befestigungsschnittstelle bzw. an dem Wandadapter aufliegen.

Alternativ kann die Haltevorrichtung auch als Federarm ausgebildet sein, welche eine Höhenverstellung des Endgeräts ermöglicht. Wichtig ist hierbei, dass der Zapfen, die Buchse und der Körper, auch bei einer im Körper angeordneten Federkinematik, jeweils einen entsprechenden Hohlraum aufweisen, welcher das Führen und Verlegen der mindestens einen Versorgungsleitung durchgehend und ungehindert ermöglichen.

In einem Haltesystem können auch mehrere Haltevorrichtungen vorgesehen sein. Insoweit können auch bspw. mehrere Ausleger vorgesehen sein und/oder zusätzlich zu einem Ausleger auch ein Federarm vorgesehen sein und die Haltevorrichtungen über die Buchsen und Zapfen miteinander gekoppelt sein. Die erfindungsgemäße Haltevorrichtung ermöglicht somit einen besonders vorteilhaften modularen Aufbau eines Haltesystems mit einer sicheren Führung der mindestens einen Versorgungsleitung bis zum Endgerät.

Um die Montage der Haltevorrichtung zu erleichtern, ist bevorzugt vorgesehen, dass die Buchse und der Zapfen in die jeweilige Bohrung eingesteckt und mit dem Körper verbunden sind. Entsprechend können die Buchse und der Zapfen auf einfache Weise am Körper befestigt sein. Um die Montage weiter zu erleichtern, kann der Körper offene Stirnseiten an den jeweiligen Endbereichen aufweisen. Hierdurch können die in den Bohrungen des Körpers aufgenommenen Endbereiche der Buchse und des Zapfens leicht eingeführt und betätigt werden, um bspw. eine vorgegebene Ausrichtung zu erleichtern.

Weiterhin kann derart eine Variation der Länge der Trägerstruktur durch die Wahl einer entsprechenden Dimensionierung des Körpers ermöglicht werden. So kann der Körper bspw. eine Länge in einem Bereich von 100 mm bis 750 mm aufweisen, insbesondere kleiner als 600 mm, bevorzugt von 100 mm bis 500 mm. Entsprechend kann die Modularität der Haltevorrichtung bereits für sich genommen, aber insbesondere auch in einem Haltesystem mit mehreren Haltevorrichtungen weiter vergrößert sein.

Die Buchse der Haltevorrichtung kann am Umfang ebenfalls eine Öffnung aufweisen, welche zum Hohlraum des Körpers ausgerichtet ist, um die Führung der mindestens einen Versorgungsleitung vom Hohlraum des Körpers durch den Hohlraum der Buchse zu erleichtern. Dadurch dass die Buchse zum Aufnehmen eines Zapfens, insbesondere eines Zapfens einer weiteren Haltevorrichtung oder einer Befestigungsschnittstelle ausgebildet ist, kann in einer solchen Ausführungsform ein innerer Lagerring für den Zapfen vorgesehen sein, welcher einen aufgenommenen Zapfen lagert und axial von der Öffnung der Buchse beabstandet. Entsprechend kann der Endbereich des Zapfens, welcher in der Buchse aufgenommen ist, oberhalb der Öffnung der Buchse angeordnet sein, sodass eine durch die Öffnung der Buchse geführte Versorgungsleitung durch eine Drehbewegung des Zapfens relativ zur Buchse nicht beeinträchtigt oder beschädigt wird. Beispielsweise kann der Lagerring, welcher in der Buchse eingesetzt oder einstückig damit gebildet ist, derart bemessen sein, dass eine Versorgungsleitung am unteren Endbereich des Zapfens radial begrenzt wird.

Bevorzugt ist vorgesehen, dass neben der zweiten Bohrung in Richtung des ersten Endbereichs am Körper eine dritte Bohrung verwirklicht ist, welche zum Durchführen der mindestens einen Versorgungsleitung und des endseitigen Anschlusses der mindestens einen Versorgungsleitung ausgelegt und dimensioniert ist. Die Haltevorrichtung weist eine Abdeckung auf, welche die zweite Bohrung und die dritte Bohrung verschließt und mit dem Körper einen Hohlraum zum Aufnehmen der mindestens einen Versorgungsleitung definiert. Auf diese Weise können die Buchse und der Zapfen kleiner dimensioniert sein. Die Buchse kann in Umfangsrichtung eine durchgehende Oberfläche und Struktur bereitstellen, wodurch die Stabilität der Buchse für die drehbare Lagerung des Zapfens verbessert werden kann. Die mindestens eine Versorgungsleitung kann/können über die dritte Bohrung, insbesondere an der Unterseite des Körpers, und die untere Öffnung der Buchse in den Hohlraum der Buchse und den Hohlraum des darin aufgenommenen Zapfens eingeführt werden, sodass die mindestens eine Versorgungsleitung innerhalb des (vorderen) Gelenks und entlang der Drehachse verlegt werden kann.

Die Abdeckung kann mit einer Aufnahme am Körper, insbesondere einer einzigen Aufnahme an der Unterseite des Körpers, im Eingriff stehen und derart sicher am Körper gehalten sein. Um die Befestigung der Abdeckung zu erleichtern, kann die Abdeckung aus zwei Teilen gebildet sein, welche ineinander eingesteckt und formschlüssig miteinander verbunden sind. Die Buchse kann in senkrechter Richtung an gegenüberliegenden Endbereichen von der Abdeckung umschlossen ist. Die Abdeckungsteile können zur Verbindung miteinander mehrere Taschen und Rasthaken aufweisen, welche im verbundenen Zustand formschlüssig ineinandergreifen. Um den Hohlraum mit dem Körper zu definieren, sind die Abdeckungsteile bevorzugt halbschalenförmig ausgebildet und definieren hierbei insbesondere eine U-förmige Struktur. Entsprechend können die Halbschalen im verbundenen Zustand zumindest die Unterseite des Körpers und die darin vorgesehenen Öffnungen zu der zweiten Bohrung und dritten Bohrung abdecken sowie an der Unterseite und an der Oberseite des Körpers um die Buchse herumgeführt sein. Auf diese Weise kann die Abdeckung vorteilhafterweise formschlüssig um den Körper herum gehalten sein.

Auch kann die Stirnseite des Körpers am zweiten Endbereich von der Abdeckung umschlossen sein. Hierdurch kann in einer bevorzugten Ausführungsform, bei welcher der Körper bspw. als durchgehendes Profil ausgebildet ist, der Hohlraum des Körpers vollständig am zweiten Endbereich abgedichtet sein. Die Abdeckung kann seitlich bzw. lateral Aussparungen aufweisen, sodass die Abdeckung im Wesentlichen ausschließlich die Oberseite, Unterseite und Stirnseite des Körpers am zweiten Endbereich abdeckt.

Auf ähnliche Weise kann auch vorgesehen sein, dass der Zapfen und die erste Bohrung an der Oberseite des Körpers von einer Abdeckung abgedeckt sind, wenn der Körper an dessen Oberseite eine entsprechende Öffnung für die erste Bohrung aufweist. Gleichermaßen kann die Abdeckung am ersten Endbereich auch eine Öffnung an der Stirnseite des Körpers abdecken, etwa wenn der Körper bspw. als durchgehendes Profil ausgebildet ist. Der Zapfen in der ersten Bohrung und die Buchse in der zweiten Bohrung können zumindest radial und verdrehsicher mittels eines Befestigungselements gehalten sein. Das Befestigungselement kann einen am Umfang angeordneten radialen Gewindestift, einen am Umfang angeordneten radialen Spannstift, einen Klebstoff, eine am Umfang vorgesehene gerändelte Oberfläche oder eine Schweißverbindung umfassen. Dadurch dass der Zapfen und die Buchse während der Herstellung oder der Montage in die jeweilige Bohrung eingesetzt werden können, kann die Befestigung vorteilhafterweise gewährleisten, dass diese auch im montierten Zustand relativ zum Körper sicher gehalten werden. So können die Buchse und der Zapfen bspw. jeweils eine radiale Öffnung am Umfang aufweisen, wodurch ein Stift eingeführt werden kann, welcher in einer radialen Aufnahme am Körper eingesetzt ist. Bspw. kann eine stirnseitige Aufnahme am Körper vorgesehen sein. Hierdurch kann der Stift einfach durch eine stirnseitige Öffnung des Körpers in die Aufnahme eingesetzt und in die radiale Öffnung am Umfang eingeführt bzw. eingedreht werden.

Der Stift kann als Spannstift oder Gewindestift ausgebildet sein, wobei die radiale Öffnung entsprechend ausgebildet ist. Alternativ kann anstelle einer radialen Öffnung auch eine ringförmige Nut am Umfang vorgesehen sein, welche bspw. vor dem Einführen in die jeweilige Bohrung bis zur vorgegebenen Höhe am Umfang aufgeschoben oder aufgedreht werden kann. Der Stift kann derart einfach in die Nut eingreifen, sodass eine vorgegebene Orientierung oder Ausrichtung der Buchse bzw. des Zapfens, wie dies bei der radialen Öffnung erforderlich sein kann, nicht mehr erforderlich wird. Entsprechend kann die Montage bzw. das Zusammensetzen der Haltevorrichtung durch eine Nut erleichtert werden.

Durch die Verwendung eines Stifts, insbesondere eines Spannstifts oder Gewindestifts, können die Buchse und der Zapfen in Ergänzung zur radialen und verdrehsicheren Halterung auch axial gehalten werden, sodass ein versehentliches Herausrutschen aus zumindest einer Öffnung der jeweiligen Bohrung verhindert werden kann.

Alternativ kann aber auch vorgesehen sein, dass der Zapfen und die Buchse mit gerändelten Oberflächen versehen sind und in die jeweilige Bohrung eingedrückt werden, wobei der Zapfen und die Buchse derart reibschlüssig gehalten werden können. Auf diese Weise wird gleichfalls ermöglicht, dass ein Kippspiel weitestgehend minimiert werden kann, wobei durch die gerändelten Oberflächen beziehungsweise durch Bördeln des Zapfenendes bzw. des Buchsenendes bevorzugt ebenfalls ein Herausrutschen des Zapfens bzw. der Buchse aus dem Körper verhindert werden kann und somit eine axiale Sicherung des Zapfens bzw. der Buchse im Körper bereitgestellt werden kann. Auf diese Weise kann auf eine axiale Sicherung beispielsweise mittels eines Stifts optional verzichtet werden. Alternativ können der Zapfen und die Buchse auch mittels einer Presspassung im Körper bzw. in der jeweiligen Bohrung gehalten werden. Alternativ kann am Umfang der Buchse und des Zapfens ein Klebstoff vorgesehen sein, welcher im eingesetzten Zustand mit einer Kontaktfläche am Körper aushärtet. Entsprechend werden unterschiedliche Ausführungsformen offenbart, um den Zapfen und die Buchse zumindest radial und verdrehsicher und bevorzugt auch axial relativ zum Körper zu halten. Um die axiale Halterung weiter zu verbessern, kann optional die vorstehend beschriebene Befestigung mittels eines Stifts, insbesondere eines in einer Nut aufgenommenen Spannstifts, vorgesehen sein.

Gemäß einer weiteren Alternative können der Zapfen und die Buchse auch mittels einer Schweißverbindung mit dem Körper verbunden sein. So können der Zapfen, die Buchse und der Körper bspw. aus einem ähnlichen Material hergestellt sein, bevorzugt aus einem Metall oder einer Metalllegierung, wobei der Zapfen und die Buchse im eingesetzten Zustand in der jeweiligen Bohrung mit dem Körper mittels einer Schweißverbindung verbunden werden.

Die senkrechten Drehachsen, welche von der Buchse und dem Zapfen gebildet werden, ermöglichen eine Schwenkbewegung eines an der Haltevorrichtung befestigten Endgeräts. Hierfür sind die Geometrie der Buchse und des Zapfens bevorzugt aufeinander abgestimmt, sodass die Buchse bei einer Kopplung mit einer weiteren Haltevorrichtung oder einer entsprechenden Befestigungsschnittstelle einen entsprechenden Zapfen aufnehmen kann. Um ein weniger vorteilhaftes Spiel zwischen der Buchse und dem Zapfen weitestgehend zu vermeiden, ist die Buchse bevorzugt zum reibschlüssigen Aufnehmen eines Zapfens einer weiteren Haltevorrichtung ausgebildet. Eine Länge der Buchse in senkrechter Richtung kann in einem Bereich von 40 mm bis 100 mm liegen, bevorzugt von 60 mm bis 80 mm. Erfindungsgemäß wurde festgestellt, dass durch den bevorzugten Längenbereich ein vorteilhafter Bewegungswiderstand bereitgestellt werden kann, welcher eine Anpassung der Position bzw. eine kontrollierte Schwenkbewegung ermöglicht; hingegen wird hierdurch ein selbsttätiges Drehen vermieden wird. Alternativ oder zusätzlich kann die Buchse ebenfalls zum formschlüssigen Aufnehmen eines Zapfens einer weiteren Haltevorrichtung ausgebildet sein. So kann insbesondere radial lediglich ein geringes Spiel vorhanden sein. Eine auf den Zapfen wirkende Biegebelastung kann dabei ebenfalls Kontaktkräfte zwischen der Buchse und dem Zapfen bereitstellen, welche die entsprechende Reibkraft hervorrufen und eine (unbeabsichtigte) Drehung des Zapfens entgegenwirken.

Der Bewegungsbereich der von der Buchse und dem Zapfen bereitgestellten senkrechten Drehachsen kann bevorzugt beschränkt sein, um zu verhindern, dass ein an der Haltevorrichtung befestigtes Endgerät insbesondere versehentlich beschädigt wird, oder um zu verhindern, dass die Haltevorrichtung selbst bzw. ein Haltesystem beschädigt oder beeinträchtigt wird, oder andere Vorrichtungen durch die Haltevorrichtung versehentlich beeinträchtigt oder beschädigt werden. Insoweit kann vorgesehen sein, dass sich angrenzend zum Umfang der Buchse und angrenzend zum Umfang des Zapfens jeweils mindestens ein Vorsprung in senkrechter Richtung vom Körper wegerstreckt. Der mindestens eine Vorsprung kann dazu ausgebildet sein, im montierten Zustand der Haltevorrichtung in Umfangsrichtung mit einem weiteren Vorsprung in Eingriff bringbar zu sein. So kann der mindestens eine Vorsprung der Buchse bspw., im montierten Zustand der Haltevorrichtung mit einer weiteren Haltevorrichtung, beim Drehen der weiteren Haltevorrichtung um die zweite Drehachse mit einem Vorsprung des angrenzenden Zapfens in Eingriff gebracht werden, wodurch eine weitere Drehung verhindert werden kann.

Bspw. kann der buchsenseitige Vorsprung eine Erstreckung in Umfangsrichtung von etwa 15 Grad aufweisen, wodurch sich ein Drehbereich von etwa 330 Grad ergibt. Gleichermaßen kann sich bei einer Erstreckung von etwa 90 Grad ein Drehbereich von etwa 180 Grad ergeben. Ein solcher Drehbereich kann bspw. besonders vorteilhaft im Falle einer Kopplung mit einer wandseitigen Befestigungsschnittstelle, wie einem Wandadapter, sein, um zu verhindern, dass die weitere Haltevorrichtung bei einer Anpassung oder Veränderung der Position versehentlich die Wand berührt.

Der mindestens eine Vorsprung kann an einem Ring vorgesehen sein, welcher um den Umfang der Buchse bzw. des Zapfens aufgesteckt ist. Die ringförmige Ausgestaltung ermöglicht eine einfache Montage und gegebenenfalls eine einfache Anpassung des Drehbereichs durch einen Austausch des Rings. Darüber hinaus kann bei einer ringförmigen Ausgestaltung eine gleichmäßige und vorgegebene Führungsfläche für den Vorsprung der angrenzenden Buchse bzw. des angrenzenden Zapfens bereitgestellt sein.

Der jeweilige Ring kann am Körper gelagert und in Umfangsrichtung gesichert sein, bspw. über entsprechende Aufnahmen am Körper und in diese eingreifende Nasen oder Stifte des Rings. Die Haltevorrichtung kann optional auch zwei Ringe mit einem jeweiligen Vorsprung aufweisen, wobei während der Montage beispielsweise beide Ringe auf die Buchse aufgesteckt und gelagert werden. Im Zusammengesetzten Zustand mit beispielsweise einer weiteren Haltevorrichtung greift der obere Ring dann mit seinen Nasen in die obere Haltevorrichtung ein, während der untere Ring mit seinen Nasen in die untere Haltevorrichtung eingreift.

Besonders vorteilhaft kann der Ring aus einem Rohrteil hergestellt sein. Der Ring und der entsprechende mindestens eine Vorsprung können als Laserrohrabschnitt bereitgestellt sein.

Alternativ kann der mindestens eine Vorsprung auch monolithisch mit dem Körper ausgebildet sein. Auf diese Weise ist eine einstückige Ausgestaltung möglich, die in diesem Fall eine separate Befestigung nicht mehr erforderlich macht. Eine solche Ausgestaltung kann insbesondere für eine am zweiten Endbereich gekoppelte Befestigungsschnittstelle vorteilhaft sein, wenn die Befestigungsschnittstelle, bspw. eine Gelenkbaugruppe, zumindest teilweise aus einem Gussteil gebildet ist.

Um die Position der Haltevorrichtung zu fixieren oder einer Anpassung oder Veränderung der Position zumindest entgegenzuwirken, kann die Haltevorrichtung weiterhin eine Feststellbremse aufweisen. Entsprechend kann die Haltevorrichtung ein Klemmelement umfassen, welches in mindestens einer Aussparung der Buchse derart eingesetzt ist, dass das Klemmelement, im montierten Zustand, mit dem Umfang eines in der Buchse aufgenommenen Zapfens in Eingriff bringbar ist. Das Klemmelement kann mittels eines radial durch den Körper geführten Vorspannelements, insbesondere mittels eines Stifts, zum Umfang des Zapfens vorspannbar sein.

Mit anderen Worten kann die Buchse der Haltevorrichtung eine Aussparung aufweisen. Hierdurch kann der Hohlraum der Buchse eine laterale oder seitliche Öffnung aufweisen und ein im Hohlraum aufgenommener Zapfen entsprechend betätigt werden. Das Klemmelement kann auf diese Weise mit der äußeren Oberfläche des Zapfens in Eingriff gebracht werden, um eine entsprechende Reibkraft oder Klemmkraft bereitzustellen, welche ein Verdrehen des Zapfens innerhalb der Buchse und um die entsprechende Drehachse verhindert oder zumindest erschwert. Der Stift kann als Gewindestift ausgebildet sein, sodass der Stift beim Eindrehen in ein Gewinde in einer entsprechenden Aufnahme am Körper sich translatorisch radial zum Klemmelement verschiebt und das Klemmelement folglich in Richtung des Hohlraums vorspannen kann. Auf diese Weise kann eine für eine Drehbewegung der (weiteren) Haltevorrichtung erforderliche Kraft mittels der justierbaren Reibungskraft oder Klemmkraft zwischen dem Klemmelement und dem aufgenommenen Zapfen vorgegeben werden oder eine Drehbewegung im Wesentlichen vollständig verhindert werden. Das Klemmelement kann als Bügel ausgebildet sein, bevorzugt aus einem Metall oder einer Metalllegierung. Bevorzugt ist das Klemmelement beidseitig entlang des Umfangs der Buchse in einer jeweiligen Aussparung eingesetzt, sodass eine Drehbewegung eines in der Buchse aufgenommenen Zapfens beidseitig vom Klemmelement beschränkt und eine verbesserte Klemmkraft bereitgestellt werden kann. Das Klemmelement ist bevorzugt U-förmig ausgebildet und kann vom Körper einerseits und von der Buchse andererseits formschlüssig gehalten sein.

Die erfindungsgemäße Haltevorrichtung hat insbesondere den Vorteil, dass Versorgungsleitungen quasi oder nahezu vollständig innerhalb der tragenden Strukturen und innerhalb der Gelenke geführt werden können. Eine solche Anordnung ist besonders vorteilhaft für Haltevorrichtungen und Endgeräte, welche dauerhaft bspw. in einem Behandlungsraum vorgesehen sind und steril gehalten werden müssen. Es kann auch vorgesehen sein, dass ein Endgerät vorübergehend befestigt werden muss oder eine zusätzliche Vorrichtung nachträglich zur Montage der Haltevorrichtung befestigt und über mindestens eine Versorgungsleitung verbunden werden muss.

Entsprechend kann vorgesehen sein, dass die Haltevorrichtung eine zusätzliche Leitungshalterung umfasst, welche halbschalenförmig ausgebildet ist und sich in Längsrichtung erstreckt. Die Leitungshalterung ist an Aufnahmen am Körper derart befestigt, dass die Leitungshalterung mit dem Körper einen Hohlraum mit einer sich in Längsrichtung erstreckenden Öffnung definiert. Im Hohlraum ist an der Leistungshalterung mindestens ein Einsatz befestigt, von dem sich eine Vielzahl an Vorsprüngen derart erstrecken, dass die Öffnung zumindest teilweise durch die Vorsprünge abgedeckt ist.

Das Vorsehen einer solchen zusätzlichen Leitungshalterung hat den Vorteil, dass bspw. Kabel für eine nachträgliche Befestigung einer weiteren Vorrichtung schnell verlegt und entkoppelt werden können. Die Öffnung ermöglicht den Zugang zum Hohlraum zum Verlegen der mindestens einen Versorgungsleitung innerhalb des Hohlraums, wobei die Vorsprünge ein Herausrutschen aus dem Hohlraum verhindern. Die Vorsprünge erstrecken sich bevorzugt senkrecht zur Längsrichtung bzw. senkrecht zur Haupterstreckungsrichtung der Öffnung. Der mindestens eine Einsatz kann in die Leitungshalterung eingeschoben oder eingesteckt sein, bspw. mit entsprechenden Nuten und Federn, bevorzugt bevor die Leitungshalterung am Körper befestigt wird und damit den Hohlraum bildet.

Um das Einführen der mindestens einen Versorgungsleitung zu erleichtern, können die Vorsprünge dünner bzw. schmaler als der angrenzende Bereich des Einsatzes und/oder dünner (d.h. weniger dick, insbesondere in vertikaler Richtung) als die halbschalenförmige Leitungshalterung ausgebildet sein. Alternativ oder zusätzlich können die Vorsprünge auch aus einem flexibleren Material als das Material der halbschalenförmigen Leitungshalterung ausgebildet sein. Entsprechend können die Vorsprünge zum Einführen der Versorgungsleitung in den Hohlraum hineinbewegt bzw. gebogen werden; hernach können sie in die ursprüngliche Position zurückversetzt werden und derart die mindestens eine Versorgungsleitung im Hohlraum lagern.

Die Vorsprünge erstrecken sich bevorzugt nicht über die gesamte Breite der Öffnung, sodass das Einführen der mindestens einen Versorgungsleitung weiter unterstützt werden kann. Auch sind an den längsseitigen Endbereichen der Öffnung bevorzugt keine Vorsprünge vorgesehen oder es weisen die am jeweiligen Endbereich benachbarten Vorsprünge einen größeren Abstand zueinander auf, um die mindestens eine Versorgungsleitung aus dem Hohlraum zum Endgerät bzw. zur Anschlussstelle zu führen.

Bevorzugt sind im Hohlraum an der Leistungshalterung zwei Einsätze derart vorgesehen, dass die Vorsprünge zueinander ausgerichtet sind. In diesem Fall können die Stirnseiten der Vorsprünge aneinandergrenzen oder optional einen mittigen Spalt bereitstellen, welcher geringer als die mindestens eine Versorgungsleitung bemessen ist.

Gemäß einem weiteren Aspekt der Erfindung wird ein Haltesystem vorgeschlagen, welches mindestens zwei vorstehend beschriebene Haltevorrichtungen umfasst, wobei mindestens eine Haltevorrichtung als Ausleger ausgebildet ist und wobei in der Buchse einer Haltevorrichtung der Zapfen einer anderen Haltevorrichtung aufgenommen ist.

Wie vorstehend beschrieben, ermöglicht die erfindungsgemäße Haltevorrichtung vorteilhafterweise einen modularen Aufbau, wobei die Buchse und der Zapfen bevorzugt geometrisch aneinander angepasst sind. Entsprechend können mehrere Haltevorrichtungen miteinander verbunden werden. Auch kann die Haltevorrichtung mit einer entsprechenden Befestigungsschnittstelle verbunden werden, bspw. einem Wandadapter und/oder einer Gelenkbaugruppe für das Endgerät, wenn die Befestigungsschnittstelle eine entsprechende Buchse bzw. einen entsprechenden Zapfen mit einer entsprechenden Geometrie aufweist.

Das Haltesystem kann zwei oder drei miteinander gekoppelte Ausleger und/oder einen Federarm aufweisen. Es können die Befestigungsschnittstellen unmittelbar miteinander verbunden sein, wenn diese eine ähnliche Körperstruktur und eine(n) entsprechende(n) Buchse bzw. Zapfen aufweisen. Bevorzugt umfasst das Haltesystem zumindest eine Haltevorrichtung, welche als Ausleger oder als Federarm ausgebildet ist, sowie einen Wandadapter und eine Befestigungsschnittstelle für das Endgerät, wobei der Wandadapter und die Befestigungsschnittstelle mit der Buchse oder dem Zapfen einer der Haltevorrichtungen drehbar gelagert sind.

Um die Haltevorrichtungen axial zueinander zu sichern, kann ein Endbereich des Zapfens, welcher in der Buchse aufgenommen ist, bevorzugt außerhalb der Buchse angeordnet sein. Der Zapfen kann mittels eines am Endbereich des Zapfens vorgesehenen Sicherungselements axial relativ zur Buchse gehalten sein. Bspw. kann der Zapfen aus der unteren Öffnung der Buchse herausragen, wobei das Sicherungselement als Sicherungsring vorgesehen ist, welcher in einer entsprechenden Nut am Umfang des Zapfens eingesetzt ist. Auf diese Weise kann verhindert werden, dass der Zapfen (und die damit verbundene Haltevorrichtung) versehentlich nach oben aus der Buchse herausgeschoben werden kann/können. Eine solche Ausgestaltung ist insbesondere bei einer durchgehenden Buchse, welche keine laterale Öffnung zum Hohlraum des Körpers aufweist, vorteilhaft; denn die axiale Sicherung kann auf diese Weise einfach an der Unterseite des Körpers bereitgestellt und von der Abdeckung überdeckt werden. Entsprechend kann eine einfache und stabile Befestigung bereitgestellt werden.

An dem in senkrechter Richtung gegenüberliegenden Endbereich des Zapfens, welcher sich typischerweise an einer Oberseite befindet, kann der Zapfen, wie vorstehend beschrieben, bevorzugt mit einem Befestigungselement am Körper gehalten werden, um zu verhindern, dass der Zapfen versehentlich aus dem Körper der entsprechenden Haltevorrichtung geschoben werden kann. Hierfür kann der Zapfen eine beidseitige axiale Sicherung aufweisen, sodass der Zapfen sicher im entsprechenden Gelenk gehalten wird.

### Kurze Beschreibung der Figuren

Bevorzugte weitere Ausführungsformen der Erfindung werden durch die nachfolgende Beschreibung der Figuren näher erläutert. Es zeigen:
Figur 1 einen Längsschnitt einer Haltevorrichtung gemäß der Erfindung;
Figur 2 die Haltevorrichtung gemäß Figur 1 im montierten Zustand mit einem Wandadapter und einer weiteren Haltevorrichtung in einem Längsschnitt;
Figur 3 die Haltevorrichtung gemäß Figur 2 mit einer verlegten Versorgungsleitung;
Figur 4 den Körper der Haltevorrichtung gemäß Figur 1 in einer perspektivischen Seitenansicht;
Figur 5 einen Ring zum Beschränken der Drehbewegung der Haltevorrichtung in einer perspektivischen Seitenansicht;
Figur 6 die Haltevorrichtung gemäß Figur 1 im montierten Zustand mit einer weiteren Haltevorrichtung und entsprechenden Ringen gemäß Figur 5;
Figur 7 eine Detailansicht des Zapfens gemäß Figur 1 in einer perspektivischen Seitenansicht;
Figur 8 eine Detailansicht der Buchse gemäß Figur 1 in einer perspektivischen Seitenansicht;
Figur 9 eine Detailansicht der Abdeckung gemäß Figur 1 in einer perspektivischen Seitenansicht;
Figur 10 eine Befestigungsschnittstelle für das Endgerät mit einem montierten Zapfen der Haltevorrichtung in einer perspektivischen unteren Seitenansicht;
Figur 11 eine Detailansicht des Zapfens gemäß Figur 10 in einer perspektivischen Seitenansicht;
Figur 12 eine perspektivische Seitenansicht eines Schraubeinsatzes zur Befestigung des Zapfens gemäß Figur 11;
Figur 13 den Zapfen gemäß Figur 11 im montierten Zustand an der Befestigungsschnittstelle aus einer Unteransicht;
Figur 14 einen Längsschnitt der Befestigungsschnittstelle gemäß Figur 10 im montierten Zustand mit der Haltevorrichtung und mit einer darin geführten Versorgungsleitung;
Figur 15 eine bevorzugte Ausführungsform einer Feststellbremse in einer perspektivischen Seitenansicht;
Figur 16 eine Haltevorrichtung gemäß Figur 1 mit einer an der Unterseite des Körpers angebrachten Leitungshalterung in einer perspektivischen unteren Seitenansicht;
Figur 17 den Körper der Haltevorrichtung gemäß Figur 1 mit zusätzlichen Aufnahmen für die seitliche Leitungshalterung;
Figur 18 eine Detailansicht der Leitungshalterung in einer perspektivischen Seitenansicht;
Figur 19 einen Einsatz für die Leitungshalterung gemäß Figur 18;
Figur 20 einen Längsschnitt der Haltevorrichtung gemäß Figur 16 mit einer in der Leitungshalterung verlegten Versorgungsleitung;
Figur 21 eine Seitenansicht eines beispielhaften Haltesystems gemäß der Erfindung;
Figur 22 einen schematischen Längsschnitt eines Haltesystems gemäß der Erfindung mit alternativen Anordnungen der Buchse und des Zapfens; und
Figur 23 einen schematischen Längsschnitt eines Haltesystems gemäß der Erfindung mit weiteren alternativen Anordnungen der Buchse und des Zapfens.

### Detaillierte Beschreibung bevorzugter Ausführungsbeispiele

Im Folgenden werden bevorzugte Ausführungsbeispiele anhand der Figuren beschrieben. Hierbei werden gleiche, ähnliche oder gleichwirkende Elemente in den unterschiedlichen Figuren mit identischen Bezugszeichen versehen. Auf eine wiederholte Beschreibung dieser Elemente wird teilweise verzichtet, um Wiederholungen zu vermeiden.

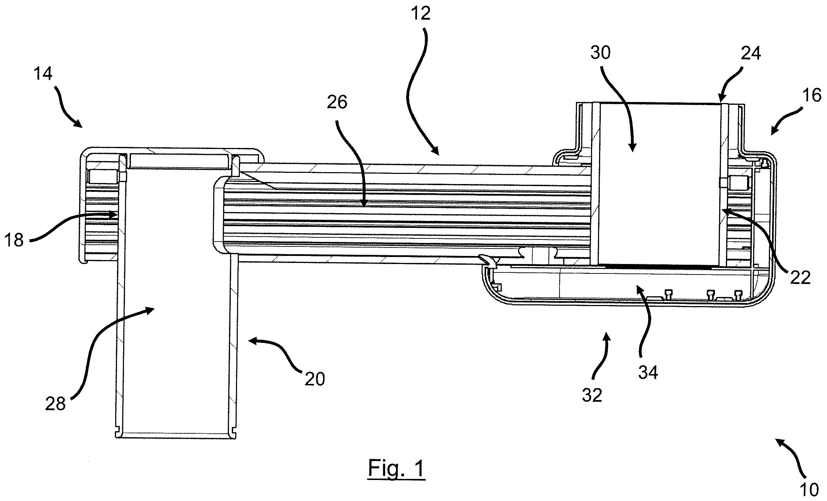

Figur 1 ist eine Haltevorrichtung 10 gemäß der Erfindung in einem Längsschnitt gezeigt. Die Haltevorrichtung 10 ist im vorliegenden Beispiel als Ausleger ausgebildet, kann alternativ aber bspw. auch als Federarm ausgebildet sein. Die Haltevorrichtung 10 umfasst einen länglichen Körper 12, welcher sich entsprechend in Längsrichtung erstreckt. Gemäß dieser beispielhaften Ausführungsform ist der Körper als Strangpressprofil ausgebildet, bspw. aus Aluminium. An einem ersten Endbereich 14 ist eine erste Bohrung 18 vorgesehen und an dem sich in Längsrichtung gegenüberliegenden zweiten Endbereich 16 ist eine zweite Bohrung 22 vorgesehen, wobei die Bohrungen 18, 22 vorliegend als Durchgangsbohrungen ausgebildet sind.

In der ersten Bohrung 18 ist ein Zapfen 20 eingesetzt, welcher zylinderförmig ausgebildet ist und sich senkrecht vom Körper 12 wegerstreckt. In der zweiten Bohrung 22 ist entsprechend eine Buchse 24 eingesetzt, welche ebenfalls zylinderförmig ausgebildet ist und sich senkrecht vom Körper 12 wegerstreckt. Der Zapfen 20 und die Buchse 24 sind jeweils als Hohlzylinder ausgebildet und geometrisch derart aneinander angepasst, dass der Zapfen 20 in einer Buchse 24 in einer weiteren Haltevorrichtung 10 aufgenommen werden kann und die Buchse 24 einen Zapfen 20 einer weiteren Haltevorrichtung 10 aufnehmen kann, wobei jedes Paar eines Zapfens 20 und einer Buchse 24 eine entsprechende senkrechte Drehachse definiert.

Der Körper 12 weist einen inneren bzw. innenliegenden Hohlraum 26 auf. In der vorliegenden Ausführungsform ist der Körper 12 als Profil ausgebildet und weist somit einen durchgehenden Hohlraum 26 sowie Öffnungen an den entsprechenden Stirnseiten auf. Der hohlzylinderförmige Zapfen 20 sowie die hohlzylinderförmige Buchse 24 weisen ebenfalls einen jeweiligen inneren bzw. innenliegenden Hohlraum 28, 30 auf, wobei der Zapfen 20 weiterhin eine radiale Öffnung aufweist, die derart angeordnet und bemessen ist, dass sie zum Hohlraum 26 des Körpers 12 ausgerichtet und zum Durchführen eines Anschlusses einer Versorgungsleitung geeignet ist. Entsprechend kann eine Versorgungsleitung für ein Endgerät über den Hohlraum 28 des Zapfens in den Hohlraum 26 des Körpers 12 geführt sein.

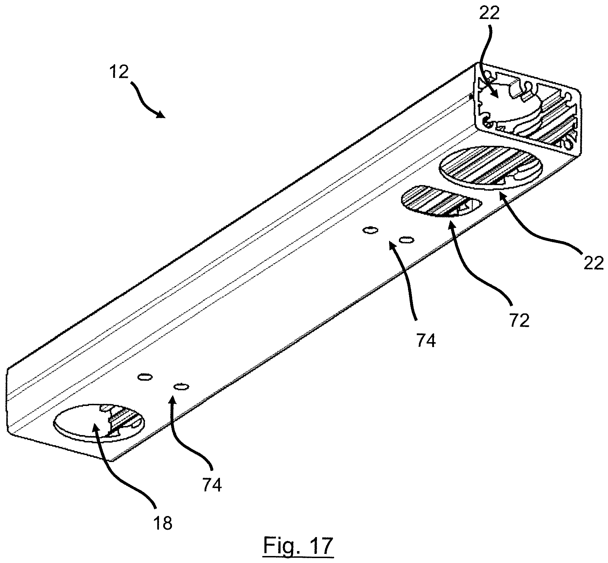

Am zweiten Endbereich 16 weist der Körper 12 weiterhin eine dritte Bohrung 72 (in Figur 1 nicht gezeigt) auf, wie dies in der Figur 17 veranschaulicht wird. Über diese Bohrung kann die Versorgungsleitung in die untere Öffnung der Buchse 24 eingeführt und über den Hohlraum 30 der Buchse 24 weiter in Richtung einer weiteren Haltevorrichtung 10 oder einer Befestigungsschnittstelle geführt sein. Um sowohl die zweite Bohrung 22 als auch die dritte Bohrung abzudecken und die Versorgungsleitung sicher zu verlegen, weist die Haltevorrichtung am zweiten Endbereich 16 eine entsprechende Abdeckung 32 auf. Die Abdeckung 32 definiert zusammen mit dem Körper 12 einen weiteren Hohlraum 34, in welchem die Versorgungsleitung aufgenommen sein kann. Entsprechend kann die Versorgungsleitung vollständig innerhalb der Haltevorrichtung und insbesondere innerhalb der Gelenke, welche durch den Zapfen 20 und die Buchse 24 definiert werden, geführt sein.

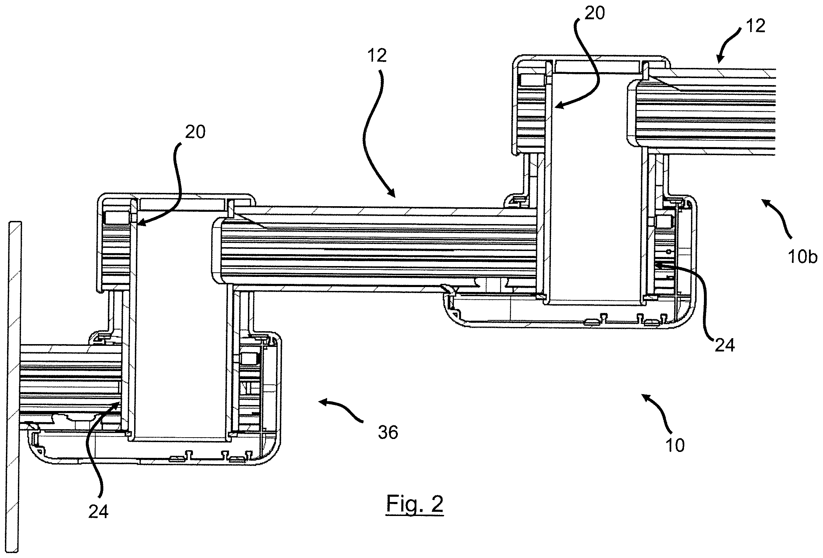

In Figur 2 ist die Haltevorrichtung 10 gemäß Figur 1 im montierten Zustand mit einem Wandadapter 36 und einer weiteren Haltevorrichtung 10b in einem entsprechenden Längsschnitt dargestellt. Der Zapfen 20 der unteren Haltevorrichtung 10 ist in einer geometrisch angepassten Buchse 24 des Wandadapters 36 aufgenommen. In der Buchse 24 der unteren Haltevorrichtung 10 ist weiterhin der Zapfen 20 der oberen Haltevorrichtung 10 aufgenommen. Entsprechend können zwei Haltevorrichtungen 10, 10b einfach miteinander sowie mit einem Wandadapter 36 und/oder anderen Befestigungsschnittstelle gekoppelt sein.

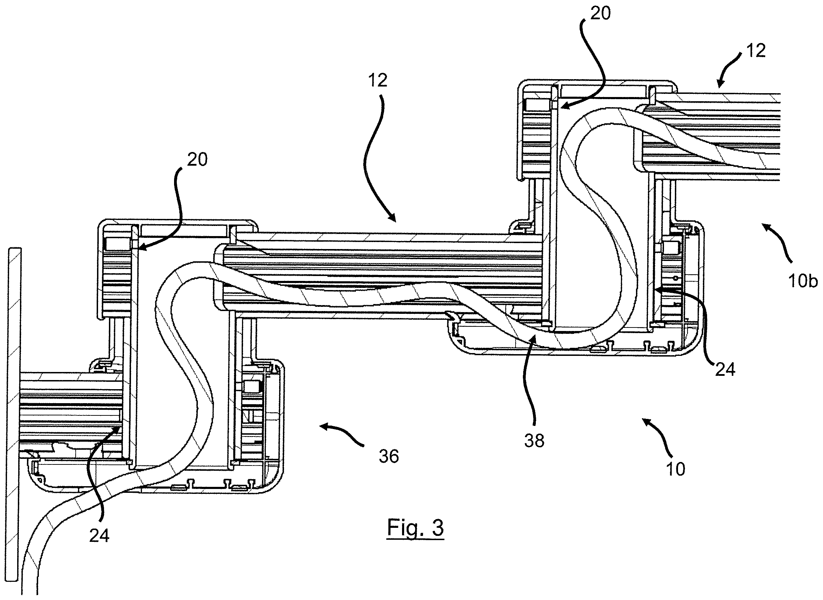

Auf diese Weise wird zudem veranschaulicht, dass der erfindungsgemäße Aufbau der Haltevorrichtung 10 nicht nur einen modularen Aufbau ermöglicht. Darüber hinaus wird durch die Ausgestaltung des Körpers 12, des Zapfens 20, und der Buchse 24 mit den entsprechenden Hohlräumen 26, 28, 30 ersichtlich, dass eine sichere Verlegung einer Versorgungsleitung auch über mehrere Ausleger und Befestigungsschnittstellen erfolgen kann. Ein entsprechendes Beispiel ist in der Figur 3 gezeigt, wobei die Versorgungsleitung 38 über die entsprechenden Hohlräume und Bohrungen durch den Wandadapter 36 sowie durch die Haltevorrichtungen 10, 10b geführt ist und wobei die dritte Bohrung 72 sowie die Unterseite der Buchsen 24 von einer Abdeckung 32 abgedeckt sind.

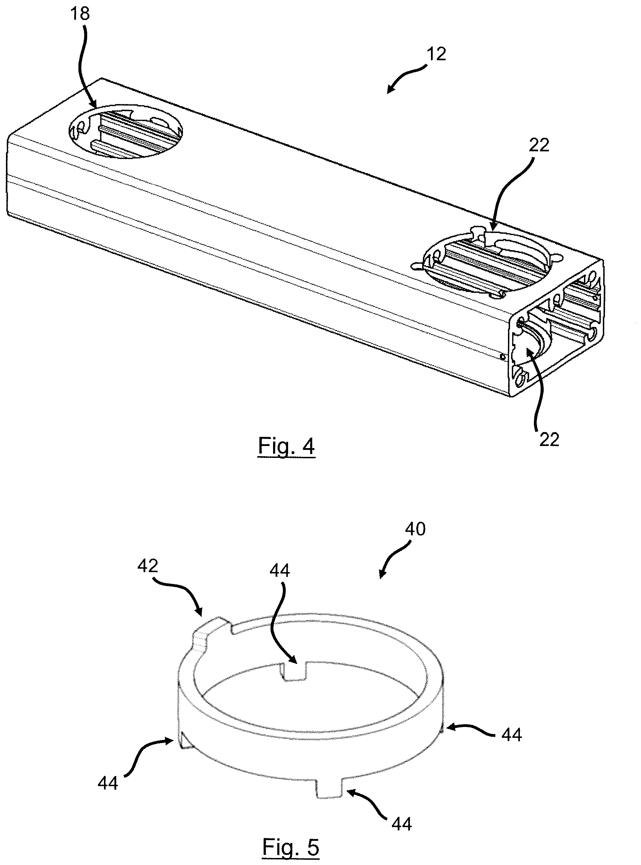

In Figur 4 ist der Körper 12 der Haltevorrichtung 10 gemäß Figur 1 in einer perspektivischen Seitenansicht dargestellt. Daraus ergibt sich, dass die Bohrungen 18, 22 jeweils als Durchgangsbohrungen durch das Profil des Körpers 12 hindurch ausgebildet sind und das Profil des Körpers 12 an den entsprechenden Stirnseiten Öffnungen aufweist. Die zweite Bohrung 22 weist weiterhin Aussparungen auf, welche zum Aufnehmen eines Rings 40 konfiguriert sind, wie in Figur 5 dargestellt.

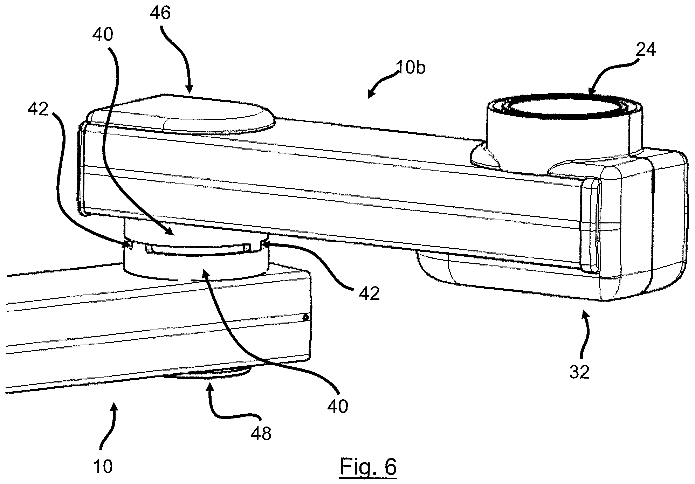

Der Ring 40 weist entsprechend vier in Umfangsrichtung voneinander beabstandete Nasen 44 oder Stifte auf, welche in den Aussparungen an der zweiten Bohrung aufgenommen werden und somit ein Verdrehen des Rings 40 relativ zum Körper 12 verhindern. Der Ring weist darüber hinaus einen einzelnen Vorsprung 42 auf, welcher im montierten Zustand sich angrenzend zur Buchse 24 senkrecht vom Körper 12 wegerstreckt. Der Vorsprung 42 ist dazu ausgebildet, mit einem entsprechenden Vorsprung 42 eines weiteren Rings 40, welcher an einem in der Buchse 24 aufzunehmenden Zapfen 20 einer weiteren Haltevorrichtung 10b befestigt ist, in Eingriff bringbar zu stehen. Eine entsprechende Ausgestaltung ist in der Figur 6 gezeigt.

Entsprechend ist ein unterer Ring 40 am Umfang der Buchse 24 der unteren Haltevorrichtung 10 vorgesehen. Es liegt ein oberer Ring 40, welcher am Zapfen 20 der oberen Haltevorrichtung 10b angebracht ist, auf dem unteren Ring 40 auf. Die entsprechenden Vorsprünge 42 können beim Drehen der Haltevorrichtungen 10, 10b zueinander über die entsprechende Drehachse miteinander im Eingriff stehen und somit den Drehbereich beschränken.

Aus der Figur 6 geht weiterhin hervor, dass die erste Bohrung 18, in welcher der Zapfen 20 aufgenommen ist, an der Oberseite am Körper 12 sowie die an dem Körper 12 angrenzende Stirnseite des Körpers 12 bevorzugt ebenfalls von einer Abdeckung 46 abgedeckt sind. Um den Zapfen 20 axial zur Buchse 24 zu sichern, ist weiterhin ein Sicherungsring 48 vorgesehen, welcher in eine Nut am Endbereich des Zapfens 20, welcher aus der Buchse 24 an der Unterseite herausragt, eingeführt ist.

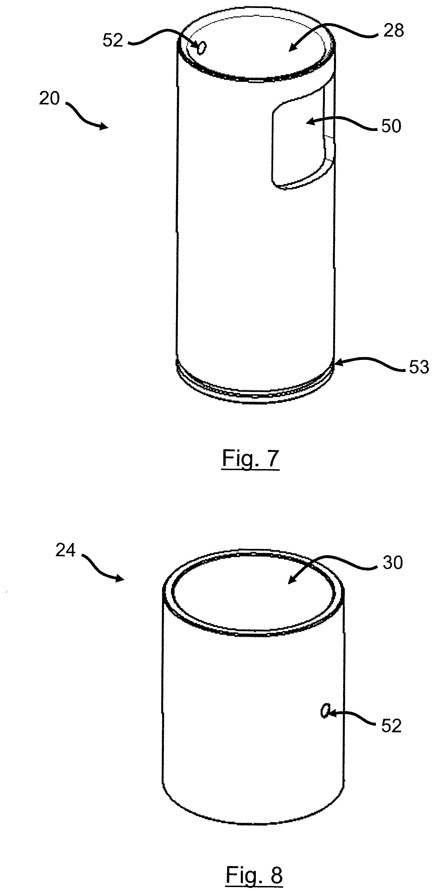

In den Figuren 7 und 8 sind Detailansichten des Zapfens 20 bzw. der Buchse 24 gemäß Figur 1 in einer perspektivischen Seitenansicht dargestellt. Zu sehen ist, dass der Zapfen 20 eine erste radiale Öffnung 50 aufweist, welche derart ausgelegt und bemessen ist, dass sie im eingesetzten Zustand des Zapfens 20 in der ersten Bohrung 18 zum Hohlraum 26 des Körpers 12 und in Richtung des zweiten Endbereichs 16 ausgerichtet ist. Weiterhin weist der Zapfen 20 eine zweite radiale Öffnung 52 auf, welche im eingesetzten Zustand zur benachbarten Stirnseite des Körpers 12 ausgerichtet ist und in welche bspw. über eine entsprechende Aufnahme im Körper 12 ein Gewindestift eingeführt werden kann, um den Zapfen 20 am Körper 12 zu sichern. Am unteren Endbereich weist der Zapfen 20 weiterhin eine Nut 53 auf, in welche ein Sicherungsring 48 eingesetzt sein kann, um den Zapfen 20 im eingesetzten Zustand in der Buchse 24 auch axial relativ zur Buchse 24 zu sichern, wie in Figur 6 gezeigt.

Der Innendurchmesser der Buchse 24 ist größer dimensioniert und geometrisch an den Außendurchmesser des Zapfens 20 angepasst, wie im Vergleich der Figuren 7 und 8 veranschaulicht wird. Ähnlich wie der Zapfen 20 weist die Buchse 24 im vorliegenden Ausführungsbeispiel eine zweite radiale Öffnung 52 auf, in welche über eine entsprechende Aufnahme im Körper 12 ein Gewindestift eingeführt werden kann, um die Buchse 24 am Körper 12 zu sichern.

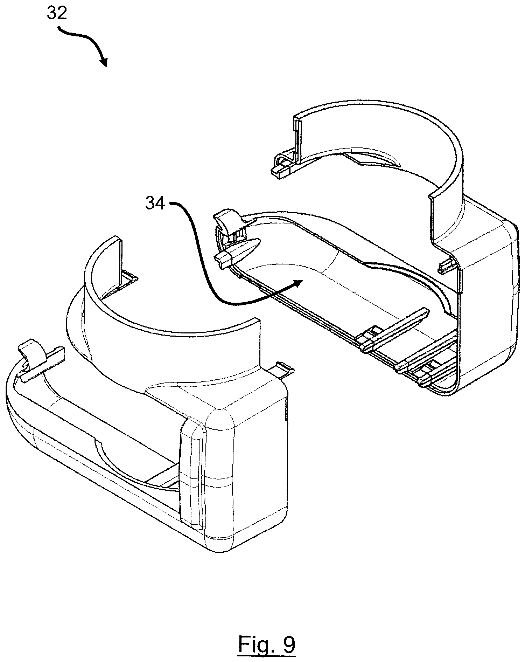

Figur 9 zeigt eine Detailansicht der Abdeckung 32 gemäß Figur 1 in einer perspektivischen Seitenansicht. Die Abdeckung 32 ist in dieser Ausführungsform zweiteilig ausgebildet und im nicht-montierten Zustand dargestellt. Die Abdeckung 32 weist besonders vorteilhaft ein U-förmiges Profil auf, sodass eine Buchse 24 sowohl an der Unterseite als auch an der Oberseite von der Abdeckung 32 umschlossen wird, nämlich an der Unterseite durch eine Aussparung und an der Oberseite durch einen Kragen. Gleichzeitig kann durch die bevorzugte Ausgestaltung der Abdeckung 32 eine angrenzende Stirnseite des Körpers 12 abgedichtet werden. Durch den Kragen und die an der Höhe des Körperprofils bemessene Abdeckung für die Stirnseite wird darüber hinaus eine vorteilhafte formschlüssige Abdichtung ermöglicht, sodass die Abdeckung 32 ohne Einsatz von Werkzeugen befestigt und am Körper 12 gehalten werden kann.

Um die Bauteile der Abdeckung 32 miteinander zu verbinden, weisen die Bauteile entsprechende Rasthaken und Taschen auf, welche beim Zusammenstecken ineinandergreifen, bevorzugt schnappschlüssig. Im zusammengesteckten Zustand wird entsprechend ein Hohlraum 34 mit der Unterseite des Körpers 12 gebildet, in welchen die Versorgungsleitung 38 über die dritte Bohrung 72 aufgenommen und in den in die Buchse 24 und den darin aufgenommenen Zapfen 20 geführt werden kann.

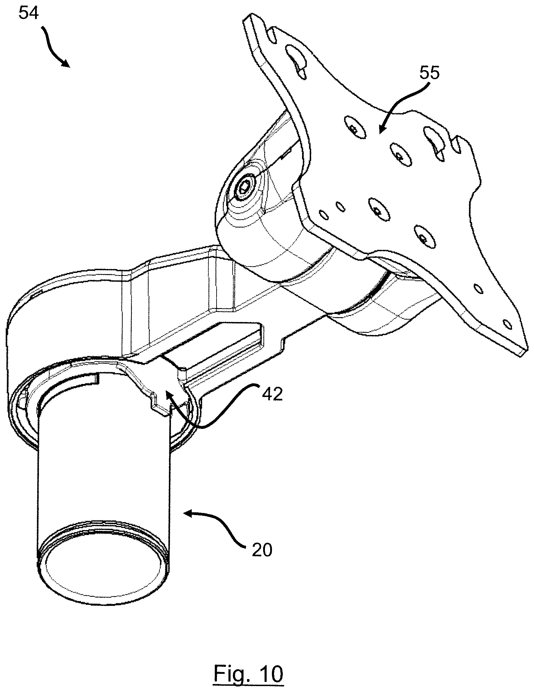

In Figur 10 ist eine Befestigungsschnittstelle 54 für das Endgerät mit einem montierten Zapfen 20 der Haltevorrichtung 10 in einer perspektivischen unteren Seitenansicht gezeigt. Die Befestigungsschnittstelle 54 ist als Gelenkbaugruppe ausgebildet, welche zumindest eine Drehung des Endgeräts um eine horizontale Drehachse ermöglicht.

Der Zapfen 20 kann entsprechend für die Aufnahme und Lagerung in einer Buchse 24 der Haltevorrichtung 10 konfiguriert sein und mit der Befestigungsschnittstelle 54 verbunden werden, um das Endgerät an der Haltevorrichtung 10 zu befestigen. Das Endgerät (nicht gezeigt) kann bspw. an einer entsprechenden Anschlussplatte 55, befestigt sein. Im vorliegenden Beispiel ist die Befestigungsschnittstelle 54 zumindest teilweise aus einem Gussteil gebildet. Ein Vorsprung 42, welcher mit dem in den Figuren 5 und 6 gezeigten Vorsprung 42 eines buchsenseitigen Rings 40 gekoppelt werden kann, ist monolithisch bzw. einstückig mit dem Gussteil ausgebildet.

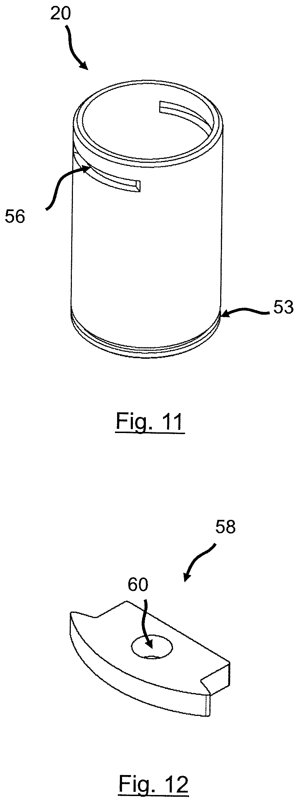

Um den Zapfen 20 an der Befestigungsschnittstelle 54 zu befestigen, kann der Zapfen 20 am Umfang zwei radial gegenüberliegende Ausschnitte 56 aufweisen, welche schlitzförmig ausgebildet sind und zur Aufnahme eines jeweiligen Schraubeinsatzes 58 konfiguriert sind, wie in den Figuren 11 und 12 gezeigt. Die Ausschnitte 56 definieren eine jeweilige Öffnung zum inneren bzw. innenliegenden Hohlraum 28 des Zapfens 20.

Die Schraubeinsätze 58 weisen jeweils eine Aufnahme 60 für eine Schraube 62 oder einen Bolzen auf. Die Schraubeinsätze 58 weisen jeweils Stufen auf, welche derart ausgebildet sind, dass sie im eingesteckten Zustand in den Ausschnitten 56 mit längsseitigen Schrägen im Eingriff stehen. Auf diese Weise werden die Schraubeinsätze 58 am Umfang gehalten; sie fluchten bevorzugt mit der äußeren Oberfläche am Umfang des Zapfens 20. Mit anderen Worten kann jeder Schraubeinsatz 58 am Umfang des Zapfens 20 in zumindest einer Erstreckungsrichtung eine größere Erstreckung als die Öffnung des jeweiligen Ausschnitts 56 aufweisen.

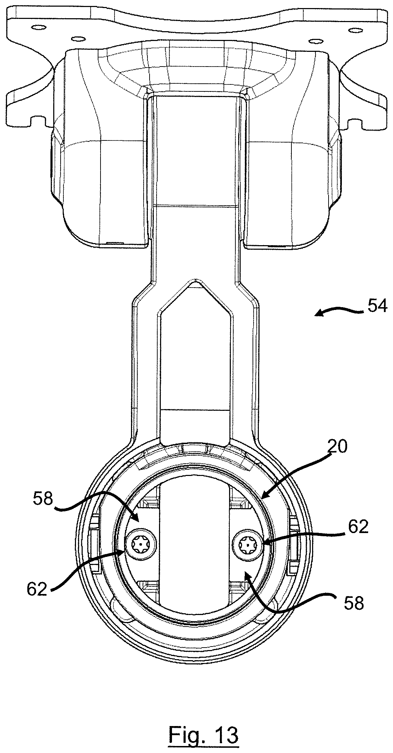

Im eingesteckten Zustand liegen die Aufnahmen 60 innerhalb des Hohlraums 28 des Zapfens 20, wobei die Aufnahmen 60 derart angeordnet sind, dass sie mit Aufnahmen an der Unterseite der Befestigungsschnittstelle 54 überlappen. Derart können die Schraubeinsätze 58 mittels Schrauben 62 an der Befestigungsschnittstelle 54 über den inneren bzw. innenliegenden Hohlraum 28 des Zapfens 20 befestigt werden, wie in Figur 13 in einer Unteransicht gezeigt. Die Schraubeinsätze 58 können bspw. als Segmente ausgebildet sein, welche von außen in die Ausschnitte 56 eingesteckt werden. Bspw. können selbstfurchende Schrauben durch die Aufnahmen in der Befestigungsschnittstelle 54 eingeschraubt werden, um den Zapfen 20 mittels der Schraubeinsätze 58 mit der Befestigungsschnittstelle 54 an der Unterseite zu verbinden.

Entsprechend ist in Figur 13 zu sehen, dass die Schraubeinsätze 58 durch die Schrauben 62 an der Befestigungsschnittstelle 54 befestigt sind. Der Zapfen 20 wird durch die Formgebung und Dimensionierung der Stufen der Schraubeinsätze 58 und der entsprechend geformten Ausschnitte 56 formschlüssig und mit einer entsprechend geeigneten Klemmkraft an der Befestigungsschnittstelle 54 gehalten.

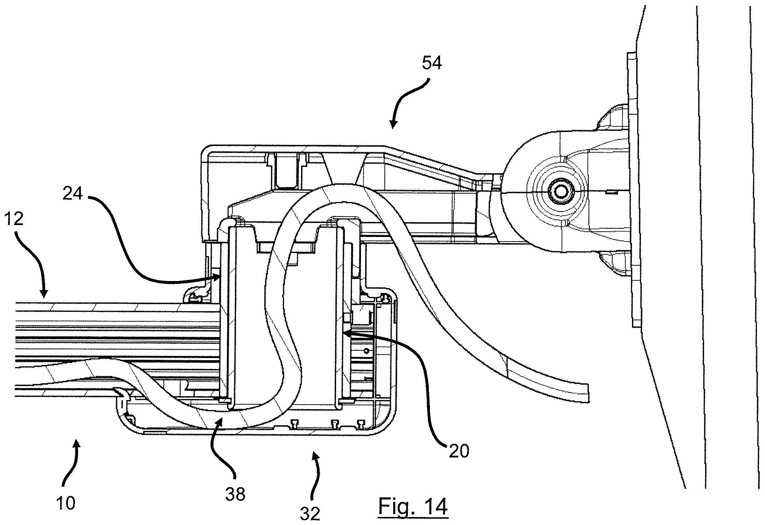

Im montierten Zustand mit einer Haltevorrichtung 10, wie in Figur 14 gezeigt, kann eine Versorgungsleitung 38 über den Hohlraum des Körpers 12, die Buchse 24 und den Hohlraum 28 des Zapfens 20 in den Körper der Befestigungsschnittstelle 54 geführt und lediglich am Endgerät, vorliegend als Monitor dargestellt, aus dem Haltesystem herausgeführt werden.

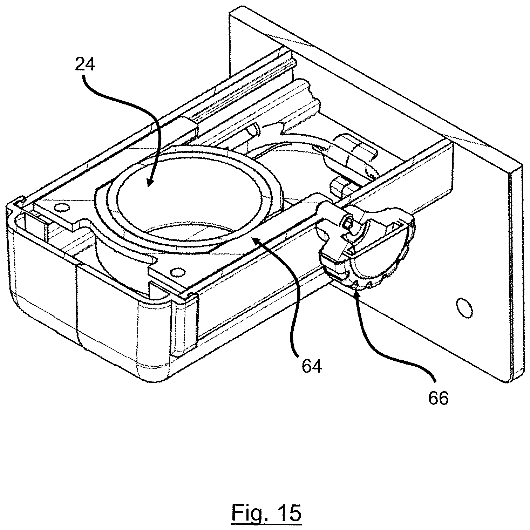

In Figur 15 ist eine bevorzugte Ausführungsform mit einer optionalen Feststellbremse in einer perspektivischen Seitenansicht gezeigt. Die Feststellbremse kann im Wesentlichen durch ein Klemmelement 64 verwirklicht sein, welches um den Umfang der Buchse 24 eingelegt ist. Die Buchse weist eine entsprechende Aussparung auf, um einen direkten radialen Kontakt zwischen dem Klemmelement 64 und der äußeren Oberfläche eines in der Buchse 24 aufgenommenen Zapfens 20 zu ermöglichen. Im vorliegenden Beispiel ist das Klemmelement 64 als U-förmiger Bügel ausgebildet und umgibt somit die gegenüberliegenden Seiten bzw. teilweise den Umfang der Buchse, in welcher jeweils eine Aussparung vorgesehen ist.

Um das Klemmelement 64 radial vorzuspannen, ist weiterhin ein Vorspannelement 66 vorgesehen, welches bspw. als Drehknopf ausgebildet sein kann, welcher im Inneren einen Gewindestift aufweist. Auf diese Weise kann der Gewindestift anhand einer Drehung translatorisch in radialer Richtung zum Klemmelement 64 vorgespannt werden, um eine Kontaktierung des Klemmelements 64 mit der äußeren Oberfläche des Zapfens 20 zu ermöglichen. Unter Berücksichtigung der Anzahl der Umdrehungen kann derart eine entsprechende Reibungskraft eingestellt werden, um für eine Drehbewegung eine Betätigungskraft vorzugeben oder um eine Drehbewegung sogar vollständig zu verhindern.

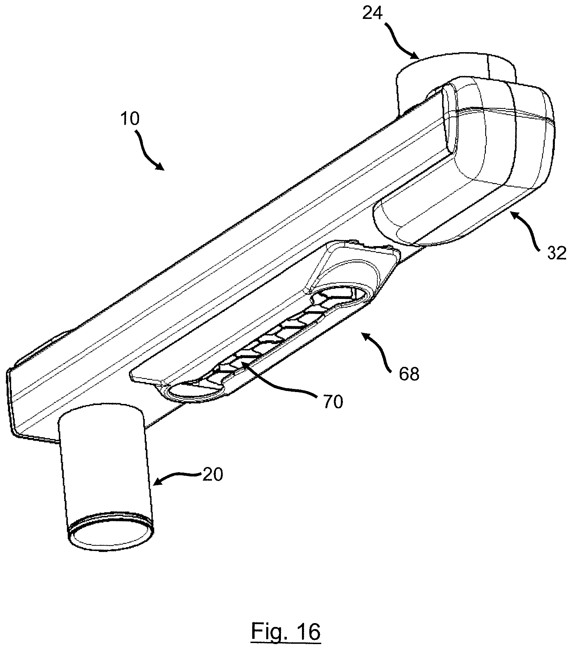

In den Figuren 16 bis 20 ist die erfindungsgemäße Haltevorrichtung 10 mit einer zusätzlichen, an der Unterseite des Körpers 12 angebrachten Leitungshalterung 68 gezeigt. Die Leitungshalterung 68 kann an entsprechenden Aufnahmen 74 an der Unterseite des Körpers 12 befestigt sein, insbesondere eingeklickt werden. Wie in den Figuren 16 und 17 gezeigt, kann die Leitungshalterung 68 zwischen der ersten Bohrung 18 und der dritten Bohrung 72 angeordnet sein, sodass für das nachträgliche und/oder vorübergehende Verlegen einer zusätzlichen Versorgungsleitung 38 keine zusätzlichen Anpassungen am Körper 12 erforderlich sind, insbesondere nicht hinsichtlich der Bohrungen 18, 22, 72 und der Abdeckungen 32, 46.

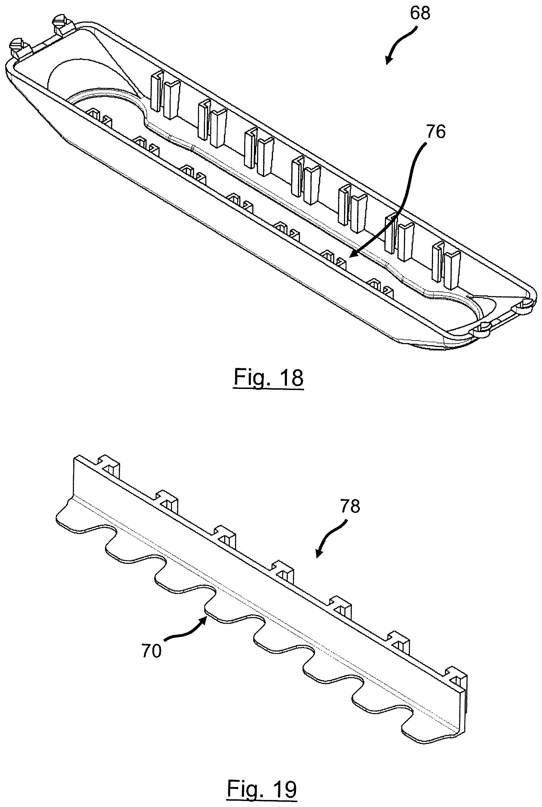

Die Leitungshalterung 68 ist halbschalenförmig ausgebildet, wie in Figur 18 gezeigt, und definiert im angebrachten Zustand am Körper 12 einen Hohlraum mit dem Körper 12, um die Versorgungsleitung 38 zu verlegen. Um das Verlegen der Versorgungsleitung 38 zu vereinfachen, weist die Leitungshalterung 68 an der Unterseite eine durchgehende, schlitzförmige Öffnung 76 auf. Auf diese Weise können bspw. ein oder mehrere Kabel sehr schnell zwischen dem Zapfen 20 und der Buchse 24 und zum Endgerät verlegt werden.

Um zu verhindern, dass die Versorgungsleitung 38 sich versehentlich aus dem Hohlraum über die Öffnung 76 herausbewegt, sind bevorzugt Einsätze 78 vorgesehen, welche eine Vielzahl von Federn aufweisen, die in entsprechenden Nuten oder Taschen in der Leitungshalterung 68 eingesteckt sind, um die Einsätze 78 somit an der Leitungshalterung 68 zu befestigen. Die Einsätze 78 weisen jeweils eine Vielzahl von Vorsprüngen 70 oder Lamellen auf, welche sich in die Öffnung 76 hinein erstrecken und/oder diese zumindest teilweise begrenzen. Auf diese Weise wird bspw. ein eingeführtes Kabel von den Vorsprüngen 70 gehalten; es kann verhindert werden, dass ein Kabel aus dem Schlitz herausrutscht. Mit anderen Worten dienen die Vorsprünge 70 als Begrenzung oder als Niederhalter, um zu verhindern, dass bspw. ein Kabel versehentlich aus dem Hohlraum herausgezogen wird.

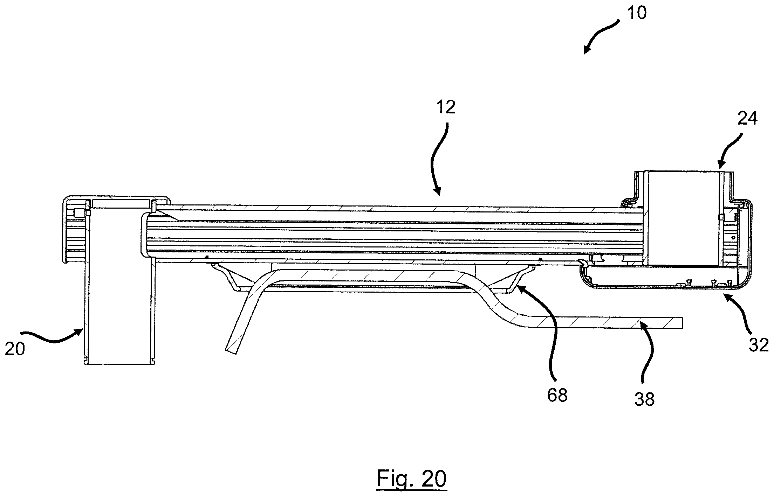

Um das Einführen einer Versorgungsleitung 38 in den Hohlraum weiter zu erleichtern, sind die Vorsprünge 70 bevorzugt aus einem flexiblen Material gebildet, sodass eine Versorgungsleitung 38 einfach in den Hohlraum gedrückt werden kann, wobei das Eigengewicht der Versorgungsleitung 38 die Haltekraft der Vorsprünge nicht übersteigen sollte. Ein Beispiel einer in der Leitungshalterung 68 verlegten Versorgungsleitung 38 ist in Figur 20 in einem Längsschnitt der Haltevorrichtung 10 gezeigt.

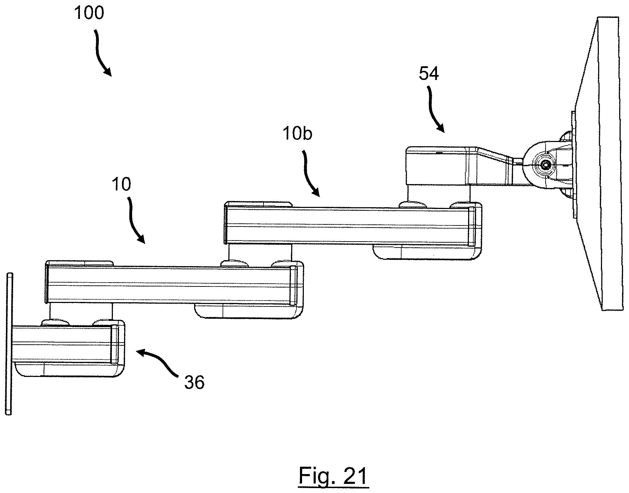

In Figur 21 ist ein Haltesystem 100 dargestellt, wobei eine Haltevorrichtung 10 mit einem Wandadapter 36 gekoppelt ist. Am zweiten Endbereich der Haltevorrichtung 10 ist eine weitere Haltevorrichtung 10b gekoppelt, wobei an der weiteren Haltevorrichtung 10b eine Befestigungsschnittstelle 54 in Form eines vorderen Gelenks mit einem Endgerät, vorliegend beispielhaft einem Monitor, befestigt ist. Die Haltevorrichtungen 10, 10b sind dabei als Ausleger ausgebildet. Die Dimensionierung der Ausleger beziehungsweise die Längserstreckung kann dabei unterschiedlich bemessen und an dem erforderlichen Schwenkbereich angepasst sein. Ebenfalls kann anstatt eines Auslegers ein Federarm vorgesehen sein, um somit eine Höhenverstellung des Endgeräts zu ermöglichen. Optional kann auch ausschließlich eine Haltevorrichtung 10 zwischen dem Wandadapter 36 und der Befestigungsschnittstelle 54 vorgesehen sein.

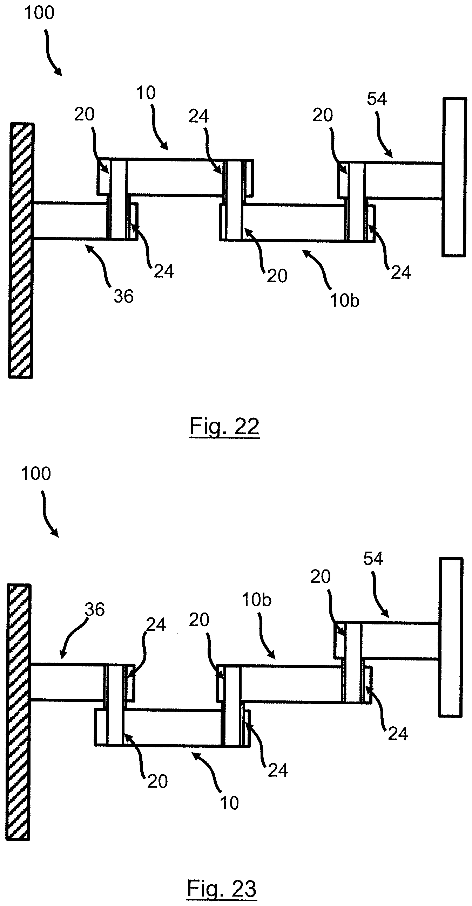

In den Figuren 22 und 23 ist jeweils ein Haltesystem 100 in einem Längsschnitt schematisch dargestellt, wobei das Haltesystem 100 ähnlich wie das Haltesystem 100 gemäß Figur 21 ausgestaltet ist. In den Ausführungsformen gemäß Figuren 22 und 23 sind die Buchse 24 und der Zapfen 20 jedoch alternativ angeordnet. So erstrecken sich gemäß Figur 22 die Buchse 24 und der Zapfen 20 sowohl in der Haltevorrichtung 10 als auch in der weiteren Haltevorrichtung 10b in die gleiche Richtung. Die Buchse 24 und der Zapfen 20 ragen in der Haltevorrichtung 10 beide an der Unterseite des Körpers 12 und in der weiteren Haltevorrichtung 10b beide an der Oberseite des Körpers 12 hervor. Die Gesamthöhe des Haltesystems 100 kann auf diese Weise besonders kompakt gehalten werden.

Gleichermaßen erstrecken sich die Buchse 24 und der Zapfen 20 gemäß Figur 23 in der Haltevorrichtung 10 in die gleiche Richtung, wobei diese an der Oberseite des Körpers 12 hervorragen. In der weiteren Haltevorrichtung 10b erstrecken sich die Buchse 24 und der Zapfen 20 ausgehend vom Körper 12 jedoch in entgegengesetzte Richtungen. Zu sehen ist, dass die Vorrichtung, welche schematisch dargestellt ist und rechts an der Befestigungsschnittstelle 54 gekoppelt ist, im Vergleich zur Ausgestaltung des Haltesystems 100 gemäß Figur 22 auf der gleichen Höhe relativ zum Wandadapter 36 angeordnet sein kann. Durch die alternative Anordnung der Haltevorrichtung 10 relativ zum Wandadapter 36, im Vergleich zur Ausgestaltung gemäß Figur 22, kann angrenzend zum Wandadapter 36 an dessen Oberseite ein größerer Bereich freigehalten bleiben, um beispielsweise eine Beeinträchtigung oder Kollision mit eventuell vorhandenen weiteren wandseitigen Vorrichtungen zu vermeiden.

Entsprechend kann durch unterschiedliche Ausgestaltungen der Haltevorrichtungen 10, 10b ein vorteilhaftes, modulares Haltesystem 100 bereitgestellt werden, wobei durch die spezifische Anordnung der Buchse 24 und des Zapfens 20 der jeweiligen Haltevorrichtungen 10, 10b eine Kaskadenform bereitgestellt werden kann, welche besonders platzsparend für das gesamte Haltesystem 100 ist.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenl iste

- 10, 10b: Haltevorrichtung
- 12: Körper
- 14: erster Endbereich
- 16: zweiter Endbereich
- 18: erste Bohrung
- 20: Zapfen
- 22: zweite Bohrung
- 24: Buchse
- 26: Hohlraum (Körper 12)
- 28: Hohlraum (Zapfen 20)
- 30: Hohlraum (Buchse 24)
- 32: Abdeckung (am zweiten Endbereich 16)
- 34: Hohlraum (Abdeckung 32, Körper 12)
- 36: Wandadapter
- 38: Versorgungsleitung
- 40: Ring
- 42: Vorsprung
- 44: Nase
- 46: Abdeckung (an der Stirnseite des Körpers 12)
- 48: Sicherungselement (Sicherungsring)
- 50: erste Öffnung
- 52: zweite Öffnung
- 53: Nut
- 54: Befestigungsschnittstelle
- 55: Anschlussplatte
- 56: Ausschnitt
- 58: Schraubeinsatz
- 60: Aufnahme (Schraubeinsatz 58)
- 62: Schraube oder Bolzen
- 64: Klemmelement
- 66: Vorspannelement
- 68: Leitungshalterung
- 70: Vorsprung (Einsatz 78)
- 72: dritte Bohrung
- 74: Aufnahme (Unterseite des Körpers 12)
- 76: Öffnung (Unterseite Leitungshalterung 68)
- 78: Einsatz
- 100: Haltesystem

## Patentansprüche

1. Haltevorrichtung (10, 10b) für ein Endgerät, umfassend
- einen länglichen Körper (12), welcher in Längsrichtung und in Umfangsrichtung eine -durchgehende Trägerstruktur definiert,
- eine zylinderförmige Buchse (24), und
- einen zylinderförmigen Zapfen (20),
wobei der Körper (12) in Längsrichtung an einem ersten Endbereich (14) eine erste Bohrung (18) und an einem dem ersten Endbereich (14) in Längsrichtung gegenüberliegenden zweiten Endbereich (16) eine zweite Bohrung (22) aufweist,
wobei der Zapfen (20) in der ersten Bohrung (18) und die Buchse (24) in der zweiten Bohrung (22) derart aufgenommen sind, dass die Buchse (24) und der Zapfen (20) sich ausgehend vom Körper (12) senkrecht und in einer Ebene erstrecken und eine jeweilige Drehachse senkrecht zum Körper (12) definieren,
wobei der Körper (12), die Buchse (24) und der Zapfen (20) jeweils einen durchgehenden innenliegenden Hohlraum (26, 28, 30) definieren, wobei die Hohlräume (26, 28, 30) zum Aufnehmen mindestens einer Versorgungsleitung (38) und zum Durchführen eines endseitigen Anschlusses der mindestens einen Versorgungsleitung (38) dimensioniert sind und wobei zumindest der Zapfen (20) eine erste radiale Öffnung (50) aufweist, welche zum Hohlraum (26) des Körpers (12) ausgerichtet ist.

2. Haltevorrichtung (10, 10b) gemäß Anspruch 1, welche als Ausleger für eine Wandbefestigung des Endgeräts ausgebildet ist.

3. Haltevorrichtung (10, 10b) gemäß Anspruch 1 oder 2, wobei die Buchse (24) und der Zapfen (20) in die jeweilige Bohrung (18, 22) eingesteckt und mit dem Körper (12) verbunden sind und/oder wobei die Buchse (24) und der Zapfen (20) sich ausgehend vom Körper (12) in entgegengesetzte Richtungen oder in die gleiche Richtung erstrecken.

4. Haltevorrichtung (10, 10b) gemäß einem der vorstehenden Ansprüche, wobei zusätzlich zur zweiten Bohrung (22) in Richtung des ersten Endbereichs (14) eine dritte Bohrung (72) vorgesehen ist, welche zum Durchführen der mindestens einen Versorgungsleitung (38) und des endseitigen Anschlusses der mindestens einen Versorgungsleitung (38) dimensioniert ist, wobei die Haltevorrichtung (10, 10b) eine Abdeckung (32) aufweist, welche die zweite Bohrung (22) und die dritte Bohrung (72) verschließt und mit dem Körper (12) einen Hohlraum (34) zum Aufnehmen der mindestens einen Versorgungsleitung (38) definiert.

5. Haltevorrichtung (10, 10b) gemäß Anspruch 4, wobei die Abdeckung (32) aus zwei Teilen gebildet ist, welche ineinander eingesteckt und formschlüssig miteinander verbunden sind, wobei die Buchse (24) in senkrechter Richtung an gegenüberliegenden Endbereichen von der Abdeckung (32) umschlossen ist.

6. Haltevorrichtung (10, 10b) gemäß Anspruch 4 oder 5, wobei die Stirnseite des Körpers (12) am zweiten Endbereich (16) von der Abdeckung (32) umschlossen ist.

7. Haltevorrichtung (10, 10b) gemäß einem der vorstehenden Ansprüche, wobei der Zapfen (20) in der ersten Bohrung (18) und die Buchse (24) in der zweiten Bohrung (22) zumindest radial und verdrehsicher mittels eines Befestigungselements gehalten sind, wobei das Befestigungselement einen am Umfang angeordneten radialen Gewindestift, einen am Umfang angeordneten radialen Spannstift, einen Klebstoff, eine am Umfang vorgesehene gerändelte Oberfläche oder eine Schweißverbindung umfasst.

8. Haltevorrichtung (10, 10b) gemäß einem der vorstehenden Ansprüche, wobei die Buchse (24) zum reibschlüssigen und/oder formschlüssigen Aufnehmen eines Zapfens (20) einer weiteren Haltevorrichtung (10, 10b) ausgebildet ist, wobei eine Länge der Buchse (24) in senkrechter Richtung in einem Bereich von 40 mm bis 100 mm liegt, bevorzugt von 60 mm bis 80 mm.

9. Haltevorrichtung (10, 10b) gemäß einem der vorstehenden Ansprüche, wobei sich angrenzend zum Umfang der Buchse (24) und angrenzend zum Umfang des Zapfens (20) jeweils mindestens ein Vorsprung (42) in senkrechter Richtung vom Körper (12) wegerstreckt, wobei der mindestens eine Vorsprung (42) dazu ausgebildet ist, im montierten Zustand der Haltevorrichtung (10) mit einer weiteren Haltevorrichtung (10b) in Umfangsrichtung mit einem weiteren Vorsprung (42) der weiteren Haltevorrichtung (10b) in Eingriff bringbar zu sein.

10. Haltevorrichtung (10, 10b) gemäß Anspruch 9, wobei der mindestens eine Vorsprung an einem Ring (40) vorgesehen ist, welcher um den Umfang aufgesteckt ist, oder wobei der mindestens eine Vorsprung (42) monolithisch mit dem Körper (12) ausgebildet ist.

11. Haltevorrichtung (10, 10b) gemäß einem der vorstehenden Ansprüche, umfassend ein Klemmelement (64), welches in mindestens einer Aussparung der Buchse (24) derart eingesetzt ist, dass das Klemmelement (64), im montiertem Zustand der Haltevorrichtung (10, 10b), mit dem Umfang eines darin aufgenommenen Zapfens (20) in Eingriff bringbar ist, wobei das Klemmelement (64) vorzugsweise mittels eines radial durch den Körper (12) geführten Vorspannelements (66) zum Umfang des Zapfens (20) vorspannbar ist.

12. Haltevorrichtung (10, 10b) gemäß einem der vorstehenden Ansprüche, umfassend eine Leitungshalterung (68), welche halbschalenförmig ausgebildet ist und sich in Längsrichtung erstreckt, wobei die Leitungshalterung (68) an Aufnahmen (74) am Körper (12) derart befestigt ist, dass die Leitungshalterung (68) mit dem Körper (12) einen Hohlraum mit einer sich in Längsrichtung erstreckenden Öffnung (76) definiert.

13. Haltevorrichtung (10, 10b) gemäß Anspruch 12, wobei im Hohlraum an der Leistungshalterung (68) mindestens ein Einsatz (78) befestigt ist, von dem sich eine Vielzahl an Vorsprüngen (70) derart erstrecken, dass die Öffnung (76) zumindest teilweise durch die Vorsprünge (70) abgedeckt ist.

14. Haltesystem (100), umfassend mindestens zwei Haltevorrichtungen (10, 10b) gemäß einem der Ansprüche 1 bis 13, wobei mindestens eine Haltevorrichtung (10, 10b) als Ausleger ausgebildet ist und wobei in der Buchse (24) einer Haltevorrichtung (10) der Zapfen (20) einer anderen Haltevorrichtung (10b) aufgenommen ist.

15. Haltesystem (100) gemäß Anspruch 14, wobei ein Endbereich des Zapfens (20), welcher in der Buchse (24) aufgenommen ist, außerhalb der Buchse (24) angeordnet ist, wobei der Zapfen (20) mittels eines am Endbereich des Zapfens (20) vorgesehenen Sicherungselements (48) axial relativ zur Buchse (24) gehalten ist.

16. Haltesystem (100) gemäß Anspruch 14 oder 15, umfassend einen Wandadapter (36) und eine Befestigungsschnittstelle (54) für das Endgerät, wobei der Wandadapter (36) und die Befestigungsschnittstelle (54) mit der Buchse (24) oder dem Zapfen (20) einer der Haltevorrichtungen (10; 10b) drehbar gelagert sind.
